# EUROPÄISCHE PATENTSCHRIFT

(11) **EP 3 270 735 B1**
(45) Veröffentlichungstag und Bekanntmachung des Hinweises auf die Patenterteilung: **18.09.2019**
(21) Anmeldenummer: 16718196.5
(22) Anmeldetag: 17.03.2016
(51) Int. Cl.: A47C 7/66

(54) **FREILUFTSITZMÖBEL**
OUTDOOR SEATING FURNITURE
MEUBLE D'ASSISE D'EXTÉRIEUR

(30) Priorität: 18.03.2015 DE 202015002065 U
(43) Veröffentlichungstag der Anmeldung: 24.01.2018
(73) Patentinhaber: Könker, Michael, 32257 Bünde (DE)
(72) Erfinder: Könker, Michael, 32257 Bünde (DE)
(74) Vertreter: Kayser, Christoph
(86) Internationale Anmeldenummer: PCT/DE2016/000116
(87) Internationale Veröffentlichungsnummer: WO 2016/146099

(56) Entgegenhaltungen:
- FR-A- 677 480
- GB-A- 190 904 279

## Beschreibung

Bei Freiluftsitzmöbeln besteht das Problem, dass sie grundsätzlich Witterungseinflüssen ausgesetzt sind. Das führt dazu, dass Niederschläge die Sitzfläche bedecken können und es erforderlich wird, die Sitzfläche vor der Nutzung von Niederschlägen zu befreien, sofern nicht eine natürliche Trocknung durch Wind oder Sonneneinstrahlung bereits erfolgt ist. Zudem ist die Sitzfläche im Freien auch Verschmutzungen durch Blütenstaub oder Vogelkot ausgesetzt. Es besteht daher das Bedürfnis, die Sitzflächen von Freiluftsitzmöbeln vor Niederschlägen und Verschmutzungen zu schützen.

Die DE 41 43 194 A1 offenbart bereits eine Lösung für eine Sitzbank, bei der die Sitzfläche über ein Scharnier mit der Rückenlehne verbunden ist, so dass die Rückenlehne durch Umklappen auf die Sitzfläche gelegt werden kann, die dadurch geschützt ist. Eine ganz ähnliche Bank mit herunterklappbarer Rückenlehne schlägt die DE 295 20 027 U1 vor. Auch die DE 10 2006 041 640 A1 offenbart eine Sitzbank, die entweder eine klappbare Lehne oder eine doppelte Sitzfläche aufweist, die miteinander gelenkig verbunden sind und durch Auf- bzw. Abklappen es ermöglichen, dass eine gegebenenfalls nass gewordene Sitzfläche so abgedeckt wird, dass man sich trocken niedersetzen kann Ein weiteres Freiluftsitzmöbel ist aus der FR677480 bekannt.

Die bekannten Lösungen weisen den Nachteil auf, dass das betreffende Sitzmöbel beim Verlassen der Bank vom Nutzer vorausschauend von Hand betätigt werden muss, damit die Lehne ihre die Sitzfläche schützende Funktion erfüllen kann. Dass dies gerade bei Sitzmöbeln im öffentlichen Bereich häufig vergessen wird, liegt auf der Hand, da der Vorbenutzer zumeist eine andere Person ist als der Folgenutzer des Sitzmöbels. Es stellt sich somit die Aufgabe, ein Freiluftsitzmöbel bereit zu stellen, bei dem die Sitzfläche grundsätzlich geschützt ist, ohne dass es der Handhabung nach der Benutzung des Sitzmöbels bedarf.

Die Aufgabe wird mittels eines Freiluftsitzmöbels gemäß Anspruch 1 gelöst, wobei sich weitere vorteilhafte Ausführungen aus den Unteransprüchen ergeben.

Das Freiluftsitzmöbel weist ein oder mehrere Sitzelemente auf, die entweder für eine Person ausgelegt sind und Platz bieten oder auch für mehrere, je nach Bedarf. Das Sitzelement hat eine Sitzfläche, die anatomisch ausgeformt sein kann und eine Kehrseite, die der Sitzfläche entgegengesetzt ausgerichtet ist. Die Kehrseite muss nicht notwendigerweise flächig ausgebildet sein, sie kann auch Rundungen oder kantige Formen aufweisen oder beispielsweise halbkugelartig geformt sein. Das Sitzelement ist mit geeigneten Verbindungsmitteln, wie beispielsweise Rohrschellen, an einem Gestell angeordnet. Dabei ist das Sitzelement als Teil eines Schwenklagers verschwenkbar um die Längsachse einer Querstrebe des Gestells gelagert, wobei die Querstrebe mit dem übrigen Gestell starr und das Sitzelement mit der Querstrebe drehbar verbunden oder die Querstrebe an dem übrigen Gestell drehbar gelagert und mit dem Sitzelement starr verbunden sein kann. Die Konstruktion des Gestells ist vorteilhaft vereinfacht, wenn die Querstrebe ein tragender Teil des Gestells ist. Damit die Sitzfläche bei Nichtbenutzung grundsätzlich vor Niederschlägen und Verschmutzungen von oben geschützt ist, weist die Sitzfläche im Grundzustand des Freiluftsitzmöbels nach unten. Dabei wird der Grundzustand durch Schwerkraft, Federkraft, Magnetkraft und/oder einen elektromechanischen Aktuator stabilisiert, während das Freiluftsitzmöbel in seinen Funktionszustand, in dem die Sitzfläche nach oben weist, durch Handhabung oder auch durch Auslösen einer Wendemechanik vor dem Hinsetzen überführt wird.

Bei einer einfachen Ausführungsform liegt der Massenmittelpunkt des Sitzelements, einschließlich mit diesem auf derselben Seite des Schwenklagers angeordneter Bauteile, näher an der Sitzfläche als die Längsachse der Querstrebe, so dass der Massenmittelpunkt im Funktionszustand, also bei nach oben weisender Sitzfläche, oberhalb der Längsachse positioniert ist. Dadurch ist der Funktionszustand bei Nichtnutzung des Freiluftsitzmöbels nicht stabil und das Sitzelement kippt schwerkraftbedingt, so dass der Grundzustand des Freiluftsitzmöbels erreicht wird. Theoretisch ist es zwar denkbar, dass das Sitzelement auch bei oberhalb der Längs- und Schwenkachse positioniertem Massenmittelpunkt ausbalanciert werden kann, jedoch kann diese Möglichkeit praktisch vernachlässigt werden, da ein solches Ausbalancieren beim Aufstehen von dem Sitzmöbel allenfalls zufällig stattfinden könnte. Die ohnehin geringe Wahrscheinlichkeit für das unerwünschte Verharren in dem Funktionszustand nach erfolgter Benutzung kann durch leichtgängige Lager weiter reduziert werden.

Der Massenmittelpunkt kann darüber hinaus durch entsprechende Gewichtsverteilung außerhalb der durch Lotrichtung und Längsachse festgelegten Ebene angeordnet sein mit der Folge, dass das Sitzelement noch leichter von dem Funktions- in den Grundzustand kippt.

Zusätzlich oder alternativ zu einer schwerkraftbedingten Überführung des Freiluftsitzmöbels von seinem Funktions- in den Grundzustand ist es möglich, das Sitzelement über ein Antriebselement mit dem Gestell zu verbinden, durch das eine Kraft auf das Sitzelement ausgeübt wird, um so die Stabilisierung des Grundzustands zu erreichen. In einer einfachen Ausführungsform sind an der starren Querstrebe links und recht des Sitzelements Blattfedern angeordnet, die beispielsweise bei nach oben weisender Sitzfläche so gespannt sind, dass sie das Sitzelement bei ihrer Entspannung in den Grundzustand drehen, bei dem die Sitzfläche nach unten weist. Um zu verhindern, dass ein Nutzer beim Wenden des Sitzelements in den Funktionszustand die Rotationsbewegung weiterführt, mit dem Risiko, die Blattfedern zu überdehnen, anstatt die Rotationsbewegung entgegengesetzt auszuführen, ist es vorteilhaft, an der starren Querstrebe einen Stopper anzubringen, der eine Überdehnung der Blattfedern blockierend verhindert. Der Stopper kann selbstverständlich auch an anderer Stelle des Gestells oder auch an dem Lehnenelement angeordnet sein.

Eine interessante Möglichkeit der Überführung des Freiluftsitzmobels von dem Funktionszustand in den Grundzustand ergibt sich auch durch die Kombination einer schwerkraftbedingten Rotation des Sitzelementes durch entsprechende Anordnung, wie oben dargelegt, des Massenmittelpunktes mit einem Magneten, der beispielsweise an der starr ausgeführten Querstrebe angebracht sein kann und mit einer Metallfläche an der Kehrseite interagiert, um das Sitzelement in eine beispielsweise exakt waagerechte Lage zu ziehen. Die Interaktionsflächen von Magnet und Metallfläche sind dabei vorzugsweise orthogonal zu der Querstrebe angeordnet. Dadurch kann gleichzeitig die Stopperfunktion erfüllt werden. Vorzugsweise sollte der Magnet im Grundzustand sichtbar, bevorzugt an der Kehrseite, angeordnet sein, damit die korrekte Drehrichtung für die Überführung in den Funktionszustand für einen Nutzer offensichtlich ist.

Das Antriebselement kann vorteilhaft auch ein elektromechanischer Aktuator sein, der das Freiluftsitzmöbel mit geringer Kraft, die händisch durch Umdrehen des Sitzelementes überwunden werden kann, in dem Grundzustand stabilisiert. Diese Lösung ist aufwändiger, weil der Aktuator Strom benötigt. Bevorzugt wird dieser Strom nicht von außen zugeführt sondern durch Solarzellen einer kleinen Photovoltaikanlage bereit gestellt. Dabei werden die Solarzellen bevorzugt auf der Kehrseite angeordnet und der Akkumulator wird an dem Gestell angeordnet. Unter Akkumulator wird hier generell ein Energiespeicher verstanden, einerlei ob wiederaufladbar oder nicht, also auch Batterien. Besonders bevorzugt ist es, den Akkumulator, ebenso wie die Antriebeinheit des Aktuators in einen Trägerholm mit entsprechendem Lumen unterzubringen. Um einen mögllichst geringen Stromverbrauch zu erreichen, ist es vorteilhaft, das Freiluftsitzmöbel mit Sensoren auszustatten, wie beispielsweise Drucksensoren an oder in der Standfläche des Freiluftsitzmöbels. So kann die Antriebseinheit des Aktuators immer dann stromlos geschaltet werden, wenn die Drucksensoren durch einen Nutzer des Sitzmöbels eine Druckbelastung registrieren. Noch stromsparender ist es, wenn nach dem Druckentlastungsignal des Drucksensors, der beispielsweise auch in dem Sitzelement angeordnet sein kann, nur eine kurze Zeit Strom fließt, die für die Herbeiführung des Grundzustands ausreichend lang bemessen ist. Statt Drucksensoren können beispielsweise auch Näherungssensoren verwendet werden.

Damit das Freiluftsitzmöbel komfortables Sitzen ermöglicht, ist es erfindungsgemäß vorgesehen, wenn es nicht nur ein Sitzelement sondern auch ein Lehnenelement aufweist. Ein solches Lehnenelement kann starr an dem Gestell angeordnet oder bereits in dieses integriert sein, was jedoch nicht in den Rahmen der Erfindung fällt. Es erhöht jedoch den Sitzkomfort, wenn das Lehnenelement entsprechend Anspruch 1 als separates Bauteil drehbar um die Längsachse einer parallel zu der Querstrebe verlaufenden Zusatzstrebe des Gestells angeordnet ist, so dass sich das Lehnenelement besser an den Rücken des Nutzers anpassen kann. Darüber hinaus besteht so der Vorteil, dass auch das Lehnenelement analog dem Sitzelement in einem den Grundzustand des Freiluftsitzmöbels ergänzenden Schonzustand, bei dem die Lehnfläche des Lehnenelements nach unten weist, stabilisiert werden kann.

Besonders komfortabel lässt sich das Freiluftsitzmöbel ausstatten, wenn in dem Funktionszustand unterhalb der Sitzfläche ein oder mehrere Heizelemente angeordnet sind, die durch externe Stromzufuhr oder aber durch ein in das Möbel integrierte kleine Photovoltaikanlage versorgt werden können, wobei selbstverständlich eine Kombination mit einem elektromechanischen Aktuator, der wie oben beschrieben den Grundzustand stabilisiert, eine elegante Lösungsvariante darstellt. Die Stromzufuhr der Heizelemente kann ebenfalls an Druck- oder Näherungssensoren gekoppelt sein, so dass nur dann geheizt wird, wenn die betreffende Sitzfläche tatsächlich genutzt wird. Bei Sitzelementen mit mehreren Sitzflächen ist es vorteilhaft, jeder Sitzfläche ein separat ansteuerbares Heizelement zuzuordnen, ebenso bei einem Freiluftsitzmöbel mit mehreren Sitzelementen.

Schließlich bietet das Freiluftsitzmöbel in einer bevorzugten Ausführungsform einen Fuß aus Beton oder ähnlichem Material, in das der oder die Trägerholme, vorzugsweise zwei Trägerholme, in einem Winkel von 40° bis 60°, besonders bevorzugt von 50°, einmünden. Die Trägerholme können aufgeschraubt oder einbetoniert sein oder auch aus Metall ausgeformt sein. Je nach Gewicht des Fußes oder der Füße ist es vorteilhaft, wenn diese die aus Lotrichtung und Längsachse der Querstrebe gebildete Ebene schneiden, um ein Umkippen des Freiluftsitzmöbels nach hinten zu vermeiden. Das Freiluftsitzmöbel kann durch Einbetonieren der Trägerholme besonders gut an schwierig zugänglichen Orten, beispielsweise an Aussichtspunkten in Berglandschaften, aufgestellt werden.

Für eine einfache Konstruktion des Freiluftsitzmöbels ist es vorteilhaft, wenn die Querstrebe ein tragendes Teil des Gestells ist, in den meisten Fällen also starr mit dem übrigen Gestell verbunden ist. So kann die Querstrebe zwei wesentlich Funktionen erfüllen, nämlich zum einen zu einer für Sitzzwecke belastbaren Statik des Gesamtmöbels beizutragen und zum anderen als Grundbauteil des Schwenklagers zu dienen. Die Doppelfunktion der Querstrebe verringert den erforderlichen Materialeinsatz und führt zu geringen Herstellungskosten.

Um den Sitzkomfort des Freiluftsitzmöbels weiter zu erhöhen, können an dem Sitzelement oder mit diesem auf derselben Seite des Schwenklagers verbundenen Bauteilen verschiebliche und arretierbare Gewichte angeordnet sein, die eine Verlagerung des Massenmittelpunktes ermöglichen. Die Einstellmöglichkeiten solcher Gewichte müssen seltbstverständlich beschränkt sein, soweit der Massenmittelpunkt für die schwerkraftbedingte Stabilisierung des Grundzustands genutzt wird. Altenativ oder ergänzend zum Einsatz von Gewichten zur Verlagerung des Massenmittelpunktes kann das Sitzelement auch so an der Querstrebe angeordnet sein, dass es weiter in Richtung der im Funktionszustand vorne liegenden Kante der Sitzfläche angeordnet in entsprechende Verbindungsmittel einrastet oder mittig oder weiter hinten. Bei einer runden Querstrebe kann hierzu das Sitzelement beispielsweise aus Kunststoff geformt sein mit entsprechenden halbkreisförmigen in Reihe aufeinanderfolgenden Ausnehmungen.

Nachfolgend wird die Erfindung anhand eines Ausführungsbeispiels und der Zeichnung beispielhaft näher erläutert.

**Legende**

| | | | |
|---|---|---|---|
| 1 | Freiluftsitzmöbel | | |
| 2 | Gestell | | |
| 3 | Sitzelement | | |
| 4 | Sitzfläche | | |
| 5 | Kehrseite | | |
| 6 | Schwenklager | | |
| 7 | Querstrebe | | |
| 8 | Längsachse der Querstrebe | | |
| 9 | Lehnenelement | | |
| 10 | Zusatzstrebe | | |
| 11 | Längsachse der Zusatzstrebe | | |
| 12 | Trägerholm | A | Grundzustand |
| 13 | Fuß | B | Funktionszustand |
| 14 | Lehnfläche | C | Schonzustand |
| 15 | Rückseite | | |

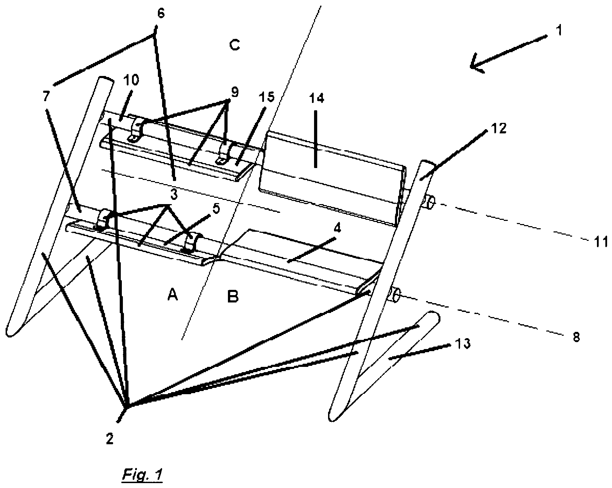

**Fig. 1** zeigt eine einfache Ausführung des Freiluftsitzmöbels (1) schräg von vorn. Zu erkennen ist das Gestell (2) mit Trägerholmen (12), Füßen (13), Querstrebe (7), Zusatzstrebe (10) und mit zwei Sitzelementen (3) und zwei Lehnenelementen (9), von denen ein Paar (3, 9) aus Sitzelement (3) und Lehnenelement (9) links einer nahezu senkrechten Hilfslinie angeordnet ist und ein weiteres solches Paar (3, 9) rechts dieser Hilfslinie. Dabei befindet sich das hier gezeigte zweipaarige Freiluftsitzmöbel bezüglich des Sitzelements (3) links der Hilfslinie in dem Grundzustand (A), in dem die Kehrseite (5) des Sitzelements (3) nach oben weist, sowie bezüglich des Lehnenelements (9) in dem Schonzustand (C), in dem die Rückseite (15) nach oben weist, und bezüglich des Sitzelements (3) rechts der Hilfslinie in dem Funktionszustand (B), in dem die Sitzfläche (4) nach oben weist.. Die hier gezeigt Mischung der möglichen Zustände setzt voraus, dass das Paar (3, 9) rechts der Hilfslinie von einer Person besetzt ist, die hier aus Gründen illustratorischer Klarheit nicht gezeigt ist, während das Paar (3, 9) links der Hilfslinie unbesetzt ist, so dass sowohl die Sitzfläche (4) als auch die Lehnfläche (14) nach unten zeigt und vor Niederschlägen und Ähnlichem geschützt ist. Der Grundzustand (A) stellt sich aufgrund des Massenschwerpunkts des Sitzelements (3), das auch die entsprechenden Verbindungsmittel, hier Rohrschellen, umfasst, automatisch ein, da das Sitzelement Teil des Schwenklagers (6) ist, das einerseits aus dem Sitzelement (3) und andererseits aus der Querstrebe (7) aufgebaut ist und eine Verschwenkung des Sitzsleements (3) um die Längsachse (8) der Querstrebe (7) ermöglicht. Analoges gilt für die automatische Einstellung des Schonzustands (C) bezüglich des Lehnenelements (9), das mit entsprechendem Massenmittelpunkt Teil eines weiteren Schwenklagers aus Lehnenelement (9) und Zusatzstrebe (10) ist und die Verschwenkung des Lehnenelements (9) um die Längsachse (11) der Zusatzstrebe (10) ermöglicht. Der Automatismus ergibt sich hier daraus, dass der Massenmittelpunkt des Sitzelements (3) näher an der Sitzfläche (4) liegt als die Längsachse (8) der Querstrebe (7), in dem Funktionszustand (B) bezüglich des Sitzelements (3) oberhalb der Längsachse (8) der Querstrebe (7) instabil gelagert ist und durch eine auf der Sitzfläche (4) sitzende Person stabilisiert wird. Analoges gilt hier für den Schonzustand (C) bezüglich des Lehnenelements (9), das durch den Rücken einer Person an der Lehnfläche (14) außerhalb des Schonzustands (C) stabilisiert werden kann.

## Patentansprüche

1. Freiluftsitzmöbel (1), das wenigstens ein an einem Gestell (2) angeordnetes Sitzelement (3) mit Sitzfläche (4) und Kehrseite (5) aufweist, wobei in einem Grundzustand (A) die Sitzfläche (4) nach unten und in einem Funktionszustand (B) die Sitzfläche (4) nach oben weist, wobei das Sitzelement (3) als Teil eines Schwenklagers (6) verschwenkbar um die Längsachse (8) einer Querstrebe (7) des Gestells (2) gelagert ist und durch Schwerkraft, Federkraft, Magnetkraft und/oder einen elektromechanischen Aktuator in dem Grundzustand (A) stabilisiert ist,
**dadurch gekennzeichnet**
**dass** an dem Gestell (2) wenigstens ein Lehnelement (9) drehbar um die Längsachse (11) einer zu der Querstrebe (7) parallelen Zusatzstrebe (10) des Gestells (2) angeordnet ist.

2. Freiluftsitzmöbel (1) nach Anspruch 1, **dadurch gekennzeichnet,**
**dass** das Lehnenelement (9) eine Lehnfläche (14) und eine Rückseite (15) aufweist und analog dem Sitzelement (3) durch Schwerkraft, Federkraft, Magnetkraft und/oder einen elektromechanischen Aktuator in einem den Grundzustand (A) ergänzenden Schonzustand (C), bei dem die Lehnfläche (14) nach unten weist, stabilisiert ist.

3. Freiluftsitzmöbel (1) nach einem der vorhergehenden Ansprüche,
**dadurch gekennzeichnet,**
**dass** das Sitzelement (3) über wenigstens ein Antriebselement mit dem Gestell (2) verbunden ist, wobei das Antriebselement mit einer elektrischen Antriebseinheit verbunden ist.

4. Freiluftsitzmöbel (1) nach einem der vorhergehenden Ansprüche,
**dadurch gekennzeichnet,**
**dass** das Sitzelement (3) über wenigstens ein Antriebselement mit dem Gestell (2) verbunden ist, wobei das Antriebselement ein Federelement aufweist, das in dem Funktionszustand (B) gespannt und in dem Grundzustand (A) entspannt ist.

5. Freiluftsitzmöbel (1) nach einem der vorhergehenden Ansprüche,
**dadurch gekennzeichnet,**
**dass** das Federelement einendseitig mit der Querstrene (7) oder der Zusatzstrebe (10) verbunden ist.

6. Freiluftsitzmöbel (1) nach einem der vorhergehenden Ansprüche,
**dadurch gekennzeichnet,**
**dass** die Kehrseite (5) Vertiefungen und/oder Erhebungen zur Erleichterung des Abfließens von Wasser in dem Grundzustand (A) aufweist.

7. Freiluftsitzmöbel (1) nach einem der vorhergehenden Ansprüche,
**dadurch gekennzeichnet,**
**dass** die Kehrseite (5) Solarzellen aufweist.

8. Freiluftsitzmöbel (1) nach Anspruch 7,
**dadurch gekennzeichnet,**
**dass** die Solarzellen mit der Antriebseinheit elektrisch verbunden sind.

9. Freiluftsitzmöbel (1) nach einem der Ansprüche 7 oder 8,
**dadurch gekennzeichnet,**
**dass** die Solarzellen mit einem in dem Funktionszustand (B) unterhalb der Sitzfläche (4) an oder in dem Sitzelement (3) angeordneten Heizelementen elektrisch verbunden sind.

10. Freiluftsitzmöbel (1) nach einem der Ansprüche 7 bis 9,
**gekennzeichnet**
**durch** mit der Antriebseinheit verbundenen Näherungs- und/oder Drucksensoren.

11. Freiluftsitzmöbel (1) nach einem der vorhergehenden Ansprüche,
**dadurch gekennzeichnet,**
**dass** das Gestell (2) wenigstens einen orthogonal zu der Querstrebe (7) angeordneten Trägerholm (12) aufweist, der in einem Winkel von 40° bis 60°, vorzugsweise 50° zur Waagerechten angeordnet ist, wobei in dem Trägerholm (12) die Antriebseinheit und/oder ein mit den Solarzellen elektrisch verbundener Akkumulator angeordnet ist.

12. Freiluftsitzmöbel (1) nach Anspruch einem der vorhergehenden Ansprüche,
**dadurch gekennzeichnet,**
**dass** der Massenmittelpunkt des Sitzelements (3), der bei waagerechter Ausrichtung des Sitzelements (3) außerhalb einer durch Lotrichtung und die Längsachse (8) festgelegten Ebene liegt, einschließlich mit dem Sitzelement (3) auf derselben Seite des Schwenklagers (6) verbundener Bauteile, näher an der Sitzfläche (4) liegt als die Längsachse (8) und in dem Funktionszustand (B) oberhalb der Längsachse (8) angeordnet ist, wobei das Sitzelement (3) an verschiedenen Positionen an der Querstrebe (7) eingerastet werden kann, um den Massenmittelpunkt in Bezug auf die Querstrebe (7) zu verlagern.

## Claims

1. Outdoor seating furniture (1) that has at least one seating element (3) arranged on a frame (2) with a seat surface (4) and a reverse side (5), wherein the seat surface (4) is oriented downwards in a basic state (A) and the seat surface is oriented upwards in a functional state (B), wherein the seating element (3) is pivotably mounted around the longitudinal axis (8) of a transverse strut (7) of the frame (2) as part of a pivot bearing (6) and is stabilized by the force of gravity, spring force, magnetic force and/or an electromechanical actuator in the basic state (A),
**characterized in**
**that** at least one backrest element (9) situated on the frame (2) is pivotably mounted around the longitudinal axis (11) of an additional strut (10) that is parallel to the transverse strut (7).

2. Outdoor seating furniture (1) according to Claim 1,
**characterized in**
**that** the backrest element (9) has a backrest surface (14) and the backside (15) and is stabilized analogous to the seating element (3) by the force of gravity, spring force, magnetic force and/or an electromechanical actuator in a protective state (C) in addition to the basic state (A), where the backrest surface (14) is oriented downwards.

3. Outdoor seating furniture (1) according to any one of the preceding claims,
**characterized in**
**that** the seating element (3) is connected to the frame (2) via at least a single drive element connected to an electrical drive unit.

4. Outdoor seating furniture (1) according to any one of the preceding claims,
**charcterized in**
that the seating element (3) is connected to the frame (2) via at least a single drive element wherein the drive element has a spring element that is tensioned in the functional state (B) and in a state of relief in the basic state (A).

5. Outdoor seating furniture (1) according to any one of the preceding claims,
**charcterized in**
that the spring element is connected with the transverse strut (7) or the additional strut (10).

6. Outdoor seating furniture (1) according to any one of the preceding claims,
**charcterized in**
that the reverse side (5) has indentations and/or embossments to facilitate the flow of water in the basic state (A).

7. Outdoor seating furniture (1) according to any one of the preceding claims,
**charcterized in**
that the reverse side (5) has solar cells.

8. Outdoor seating furniture (1) according to Claim 7,
**characterized in**
**that** the solar cells are electrically connected to the drive unit.

9. Outdoor seating furniture (1) according to Claim 7 or 8,
**characterized in**
**that** the solar cells are connected to a heating element that is arranged under the seat surface (4), on or in the seating element (3) in the functional state (B).

10. Outdoor seating furniture (1) according to Claim 7, 8 or 9,
**characterized by**
proximity and/or pressure sensors connected to the drive unit.

11. Outdoor seating furniture (1) according to any one of the preceding claims,
**charcterized in**
that the frame (2) has at least one support beam (12) that is arranged orthogonally to the transverse strut (7), which is situated at an angle of 40° to 60° to the horizontal one, preferably being at an angle of 50°, wherein the drive unit and/or a power pack electrically connected to the solar cells is located in the support beam (12).

12. Outdoor seating furniture (1) according to any one of the preceding claims,
**charcterized in**
that the centre of mass of the seating element (3), which in a horizontally oriented state is located outside of the plane determined by the vertical direction and the longitudinal axis (8), including the components connected with this on the same side of the pivot bearing (6) are located closer to the seat surface (4) than the longitudinal axis (8) and, in the functional state (B), are situated above the longitudinal axis (8), wherein the seating element (3) can be snapped into vaious positions on the transverse strut (7) in order to shift the centre of mass with reference to the transverse strut (7).

## Revendications

1. Siège de plein air (1), qui comprend au moins un élément d'assise (3) disposé sur un châssis (2) avec une surface d'assise (4) et un revers (5), dans un état initial (A) la surface d'assise (4) étant dirigée vers le bas et dans un état de fonctionnement (B) la surface d'assise (4) étant dirigée vers le haut, l'élément d'assise (3) étant logé en tant que partie d'un palier pivotant (6) pouvant pivoter autour de l'axe longitudinal (8) d'une traverse (7) du châssis (2) et étant stabilisé à l'état initial (A) par la force de gravité, la force élastique, la force magnétique et/ou un actionneur électromécanique,
**caractérisé en ce**
**qu'**au moins un élément d'appui (9) est disposé sur le châssis (2) pouvant tourner autour de l'axe longitudinal (11) d'une traverse complémentaire (10) du châssis (2) parallèle à la traverse (7).

2. Siège de plein air (1) selon la revendication 1,
**caractérisé en ce que**
l'élément d'appui (9) comporte une surface d'appui (14) et une face arrière (15) et est stabilisé dans un état de ménagement (C) complétant l'état initial (A) de façon analogue à l'élément d'assise (3) par la force de gravité, la force élastique, la force magnétique et/ou un actionneur électromagnétique, pour lequel la surface d'appui (14) est dirigée vers le bas.

3. Siège de plein air (1) selon l'une quelconque des revendications précédentes,
**caractérisé en ce que**
l'élément d'assise (3) est relié par au moins un élément d'entraînement au châssis (2), l'élément d'entraînement étant relié à une unité d'entraînement électrique.

4. Siège de plein air (1) selon l'une quelconque des revendications précédentes,
**caractérisé en ce que**
l'élément d'assise (3) est relié au châssis (2) par au moins un élément d'entraînement, l'élément d'entraînement comportant un élément à ressort, qui est tendu à l'état de fonctionnement (B) et est détendu à l'état initial (A).

5. Siège de plein air (1) selon l'une quelconque des revendications précédentes,
**caractérisé en ce que**
l'élément à ressort est relié du côté d'une extrémité à la traverse (7) ou à la traverse complémentaire (10).

6. Siège de plein air (1) selon l'une quelconque des revendications précédentes,
**caractérisé en ce que**
le revers (5) comporte des cavités et/ou des élévations pour faciliter l'écoulement de l'eau à l'état initial (A).

7. Siège de plein air (1) selon l'une quelconque des revendications précédentes,
**caractérisé en ce que**
le revers (5) comporte des cellules photovoltaïques.

8. Siège de plein air (1) selon la revendication 7,
**caractérisé en ce que**
les cellules photovoltaïques sont électriquement reliées à l'unité d'entraînement.

9. Siège de plein air (1) selon l'une quelconque des revendications 7 ou 8,
**caractérisé en ce que**
les cellules photovoltaïques sont électriquement reliées à un élément chauffant disposé à l'état de fonctionnement (B) en dessous de la surface d'assise (4) sur ou dans l'élément d'assise (3).

10. Siège de plein air (1) selon l'une quelconque des revendications 7 à 9,
**caractérisé**
**par** des capteurs de proximité et/ou de pression reliés à l'unité d'entraînement.

11. Siège de plein air (1) selon l'une quelconque des revendications précédentes,
**caractérisé en ce que**
le châssis (2) comporte au moins un montant de support (12) disposé de façon orthogonale par rapport à la traverse (7), qui est disposé à un angle de 40° à 60°, de préférence 50°, par rapport à la ligne horizontale, l'unité d'entraînement et/ou un accumulateur relié électriquement aux cellules photovoltaïques étant disposés dans le montant de support (12).

12. Siège de plein air (1) selon l'une quelconque des revendications précédentes,
**caractérisé en ce que**
le centre de masse de l'élément d'assise (3), qui se situe lors de l'orientation horizontale de l'élément d'assise (3) en dehors d'un plan défini par la verticale et l'axe longitudinal (8), y compris avec l'élément d'assise (3) sur le même côté du palier pivotant (6) des composants reliés se situe plus près sur la surface d'assise (4) que l'axe longitudinal (8) et est disposé à l'état de fonctionnement (B) au-dessus de l'axe longitudinal (8), l'élément d'assise (3) pouvant être enclenché sur différentes positions sur la traverse (7) pour déplacer le centre de masse par rapport à la traverse (7).
